# EUROPÄISCHE PATENTSCHRIFT

(11) **EP 2 593 259 B1**
(45) Veröffentlichungstag und Bekanntmachung des Hinweises auf die Patenterteilung: **13.11.2013**
(21) Anmeldenummer: 11772872.5
(22) Anmeldetag: 26.09.2011
(51) Int. Cl.: B23H 9/04, B23H 7/36

(54) **VORRICHTUNG ZUM TEXTURIEREN EINER WALZE**
DEVICE FOR TEXTURING A ROLLER
DISPOSITIF POUR TEXTURER UN CYLINDRE

(30) Priorität: 27.09.2010 DE 102010046557
(43) Veröffentlichungstag der Anmeldung: 22.05.2013
(73) Patentinhaber: H. Kleinknecht & Co. GmbH, 57080 Siegen-Eisern (DE)
(72) Erfinder: HAUCK, Christoph, 57258 Freudenberg (DE)
(74) Vertreter: Dörner, Kötter & Kollegen
(86) Internationale Anmeldenummer: PCT/EP2011/004807
(87) Internationale Veröffentlichungsnummer: WO 2012/048797

(56) Entgegenhaltungen:
- EP-A2- 0 076 149
- JP-A- 57 132 928
- US-A- 5 117 081
- US-B1- 7 241 962

## Beschreibung

Die Erfindung betrifft eine Vorrichtung zum Texturieren einer Walze nach dem Oberbegriff des Patentanspruchs 1.

Zur Texturierung einer Walze kommt regelmäßig ein Erodierprozess zum Einsatz. Dieser als Electrical-Discharge-Texturing (EDT) bezeichnete Prozess ermöglicht eine hochgenaue Konturierung der Walzenoberfläche. Beim EDT-Prozess werden Elektroden auf einen exakt geregelten Spalt zur rotierenden Walzenoberfläche herangefahren und in axialer Richtung osziliert. Durch den Erodierimpuls formieren sich die Partikel im Dielektrikum zwischen Walze und Elektrode zu einer Dipolbrücke, wodurch ein Stromfluss erzielt wird. Hierdurch wird ein kleiner Bereich der Walzenoberfläche aufgeschmolzen und es bildet sich im Dielektrikum eine Gasblase. Wird der Erodierimpuls abgeschaltet, implodiert die Gasblase, wodurch das geschmolzene Walzenmaterial herausgeschleudert wird. Durch die hierdurch erzeugten muldenförmigen Vertiefungen wird insgesamt eine diffuse Struktur erzielt. Die gewünschte Rauheit ist unabhängig von der Walzenhärte über Parameter wie Spannung, Steuerzeiten und Abstand der Elektroden einstellbar. Vorrichtungen zum Texturieren einer Walze sind beispielsweise in der US 7 241 962 B1 und der EP 0 076 149 A2 beschrieben.

Beim EDT-Verfahren ist die präzise Anstellung der Elektroden von besonderer Bedeutung, um einen geregelten Abstand der Elektroden zu jedem Zeitpunkt zum Walzenmaß zu gewährleisten. Hierzu kommen derzeit servohydraulische Anordnungen zum Einsatz. Dabei erfolgt die Anstellung der einzelnen Elektroden über Hydraulikzylinder, welche über ein Hydrauliksystem gesteuert werden. Nachteilig an den vorbekannten servohydraulischen Anstellsystemen ist, dass diese einen erheblichen Bauraum beanspruchen und dabei wartungs- und energieintensiv sind. Darüber hinaus ist aufgrund der Trägheit des Hydraulikfluids die Reaktionszeit solcher Systeme begrenzt, wodurch die Anstellgenauigkeit beeinträchtigt ist. Hier will die Erfindung Abhilfe schaffen. Der Erfindung liegt die Aufgabe zugrunde, eine Vorrichtung zum Texturieren einer Walze zu schaffen, welche eine genauere und dynamischere Anstellung der Elektroden bei gleichzeitig geringerem Energie- und Wartungsaufwand ermöglicht. Gemäß der Erfindung wird diese Aufgabe durch die Merkmale des kennzeichnenden Teils des Patentanspruchs 1 gelöst.

Mit der Erfindung ist eine Vorrichtung zum Texturieren einer Walze geschaffen, welche eine genauerer Anstellung der Elektroden an die Walze bei gleichzeitig geringerem Wartungs- und Energieaufwand ermöglicht. Durch den Einsatz von Linearmotoren ist ein erheblich schnelleres Anstellverhalten bewirkt. Derartige Direktantriebe weisen sehr hohe Beschleunigungen und Verfahrgeschwindigkeiten auf. Verzögerungen, wie sie bei den derzeit eingesetzten Hydrauliksystemen immanent sind, sind aufgrund der elektrisch direkt herbeigeführten Bewegung nicht vorhanden. Darüber hinaus erübrigen sich die bei den derzeit eingesetzten servohydraulischen Systemen erforderlichen hydraulischen Aggregate. Es ergibt sich eine sehr hohe Genauigkeit in jeder Elektrodenposition bei extrem schnellen Reaktionszeiten, wodurch eine sehr genaue Spaltregelung ermöglicht ist. Zudem ist eine Kontaminierung des Dielektrikums mit Hydraulikfluid ausgeschlossen.

Dadurch, dass wenigstens eine Spülleitung zur Innenspülung der Elektroden mit einem Dielektrikum angeordnet ist, ist eine Optimierung des Erodierprozesses erzielt. Bevorzugt ist je Elektrode eine Spülleitung angeordnet.

Die Spülleitung ist durch einen als Hohlprofil ausgebildeten Ausleger gebildet, wobei mittig in dem Ausleger eine mit der an dem Ausleger angeordneten Elektrode verbundene elektrische Leitung angeordnet ist, die von in dem Hohlprofil gefördertem Dielektrikum umspülbar ist. Hierdurch ist eine gegenüber äußeren Einwirkungen resistente Leitung gebilde, welche eine direkte Spülung der Elektrode mit Dielektrikum ermöglicht. Zudem wird in dieser Anordnung eine Kühlung der elektrischen Leitung durch das diese umspülende Dielektrikum bewirkt.

Bevorzugt ist der wenigstens eine Linearmotor ein Linearschrittmotor. Hierdurch ist eine besonders hohe Positioniergenauigkeit ermöglicht.

In Ausgestaltung der Erfindung ist der wenigstens eine Linearmotor mit einem Ausleger verbunden, an dem ein Elektrodenkopf zur Aufnahme einer Elektrode angeordnet ist. Hierdurch ist eine variable Positionierung des Linearmotors innerhalb der Vorrichtung ermöglicht.

In weiterer Ausgestaltung der Erfindung ist der Ausleger als Hohlprofil ausgebildet, wobei innerhalb des Hohlprofils eine elektrische Leitung angeordnet ist, die elektrisch mit der Elektrode verbunden ist. Hierdurch ist eine gute Abschirmung der elektrischen Leitung gegenüber äußeren Einwirkungen erzielt.

Vorteilhaft ist wenigstens eine Elektrode hohl ausgebildet, wobei die Spülleitung mit dem Hohlraum der Elektrode verbunden ist und wobei der Hohlraum mindestens eine Öffnung zur Spülung der Elektrode von innen heraus aufweist. Hierdurch ist eine effiziente Spülung der Elektrode mit Dielektrikum bewirkt. Diese Spülung dient der Entfernung von innerhalb des Erodierprozesses herausgeschleudertem Material aus dem Spalt zwischen Elektrode und Walze.

In Weiterbildung der Erfindung sind Mittel zur Durchflusssteuerung in Abhängigkeit von der Auslegerposition angeordnet, die bevorzugt einen Schalter umfassen, der an dem Elektrodenkopf des Auslegers angeordnet ist. Dabei ist die Durchflusssteuerung besonders bevorzugt derart ausgebildet, dass beim Zurückfahren eines Elektrodenkopfes in eine Ruheposition die Durchflussmenge des Dielektrikums zur Spülung der zugeordneten Elektrode vermindert wird. Hierdurch ist bei der Bearbeitung einer kürzeren Walze, bei der die nicht benötigten äußeren Elektroden zurückgefahren werden ein konstanter Spüldruck erreicht sowie eine erhebliche Einsparung von Dielektrikum erzielt, da die inaktiven äußeren Elektroden nun nicht mehr mit Dielektrikum gespült werden. Da eine gewisse Anzahl mittig angeordneter Elektroden unabhängig von der Walzenbreite ständig zu Einsatz kommen, ist es absolut ausreichend, solche Mittel zur Durchflusssteuerung nur bei den Elektroden im äußeren Bearbeitungsbereich der erfindungsgemäßen Vorrichtung vorzusehen.

In Ausgestaltung der Erfindung ist wenigstens eine Reihe von Elektroden angeordnet, welche jeweils mit einem Linearmotor verbunden sind, über den sie an die Walze anstellbar sind, wobei ein Rahmen angeordnet ist, an dem die Linearmotoren befestigt sind und durch den die Ausleger hindurchtreten. Dabei ist der Rahmen vorzugsweise mit einem Antrieb, insbesondere einem Spindeltrieb verbunden, über den er in Richtung der Walze bewegbar ist. Hierdurch ist eine Langhubanstellung der Elektrodenreihe als Grobeinstellung in Bezug auf den jeweiligen Walzenradius ermöglicht. Die Kurzhubanstellung der Einzelelektroden erfolgt über den jeweiligen einer Elektrode zugeordneten linearen Antrieb.

In weiterer Ausgestaltung der Erfindung sind die Linearmotoren zur Anstellung der Elektroden mit einer Steuer- und Regelungseinrichtung verbunden, die derart eingerichtet ist, dass die Linearmotoren derart angesteuert werden, dass der Abstand der Elektroden zur Walze konstant ist, wobei die Linearmotoren zumindest teilweise Mittel zur Ermittlung der Position der Elektrode aufweisen, welche mit einer Auswerteinheit verbunden sind, die derart eingerichtet ist, dass auf Basis der Position der einzelnen Elektroden die Maßhaltigkeit der Walze gegenüber vorgegebenen Sollmaßen ermittelbar ist. Hierdurch ist eine Abbildung der Ist-Maße der bearbeiteten Walze gegenüber den Sollwerten ermöglicht. Die Auswerteinheit ist darüber hinaus derart eingerichtet, dass sie in der Lage ist, abhängig von den ermittelten Soll-/Ist- Abweichungen eigenständig Regelparameter zu variieren, um Walzenfehler während des Texturierprozesses zu kompensieren. Dabei ist die Auswerteinheit bevorzugt mit einer Ausgabeeinheit verbunden, über welche die Abweichungen zwischen Soll- und Istwerten der Walzenmaße grafisch darstellbar sind.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

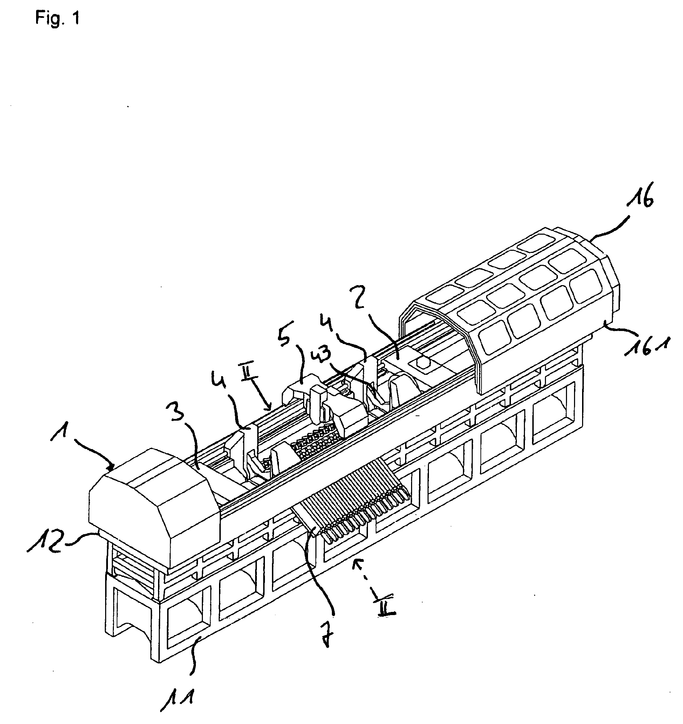

- Figur 1: die schematische räumliche Darstellung einer Vorrichtung zum Texturieren einer Walze;
- Figur 2: die schematische Darstellung der Vorrichtung gemäß Figur 1 im Schnitt II-II;

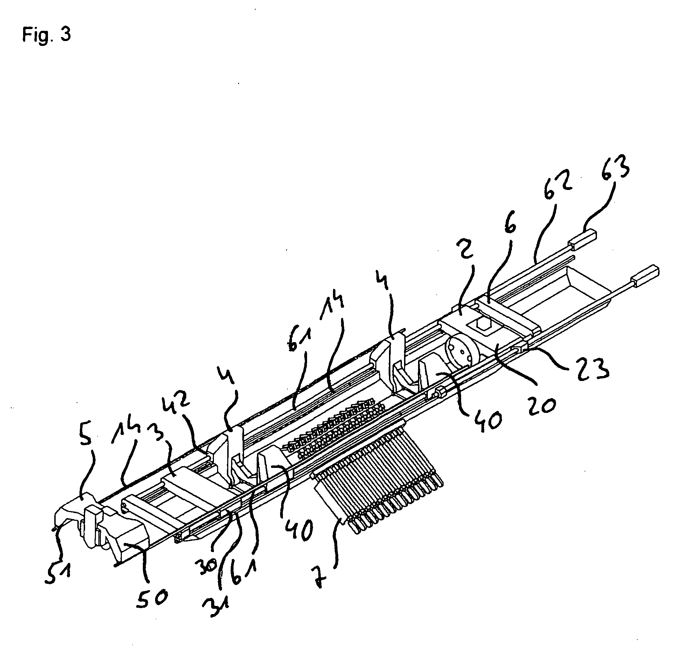

- Figur 3: die Detailansicht der Vorrichtung gemäß Figur 1 ohne Maschinenkorpus und

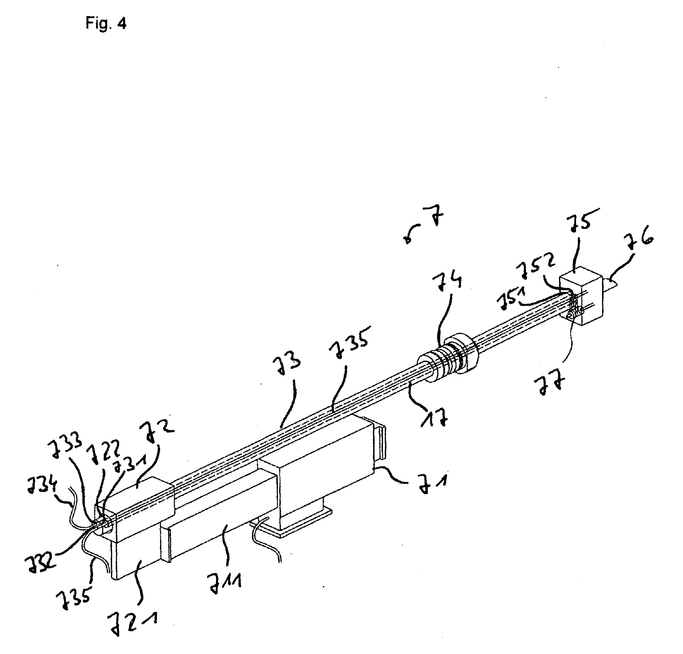

- Figur 4: die schematische Darstellung einer Elektrodeneinheit der Vorrichtung gemäß Figur 1.

Die als Ausführungsbeispiel gewählte Vorrichtung zum Texturieren einer Walze umfasst im Wesentlichen einen Maschinenkorpus 1 mit einem Walzenbecken 15, in dem in bekannter Art und Weise ein Treibstock 2 sowie ein Reitstock 3 auf einer gemeinsamen Achse beabstandet zueinander angeordnet sind. Zwischen Treibstock 2 und Reitstock 3 sind zwei Setzstöcke 4 positioniert, welche jeweils mit einem Erdungsband 43 versehen sind, an dem eine in die durch Treibstock 3, Reitstock 4 und Setzstöcke 5 gebildete Aufnahme eingespannte Walze 8 anliegt. Das Walzenbecken 15 dient der Aufnahme eines Dielektrikums 17. An den Seitenwänden des Walzenbeckens 5 sind gegenüberliegend zwei Reihen von Elektrodeneinheiten 3 angeordnet. Die Vorrichtung ist über eine teleskopartig ausgebildete Umhausung 16 einkapselbar.

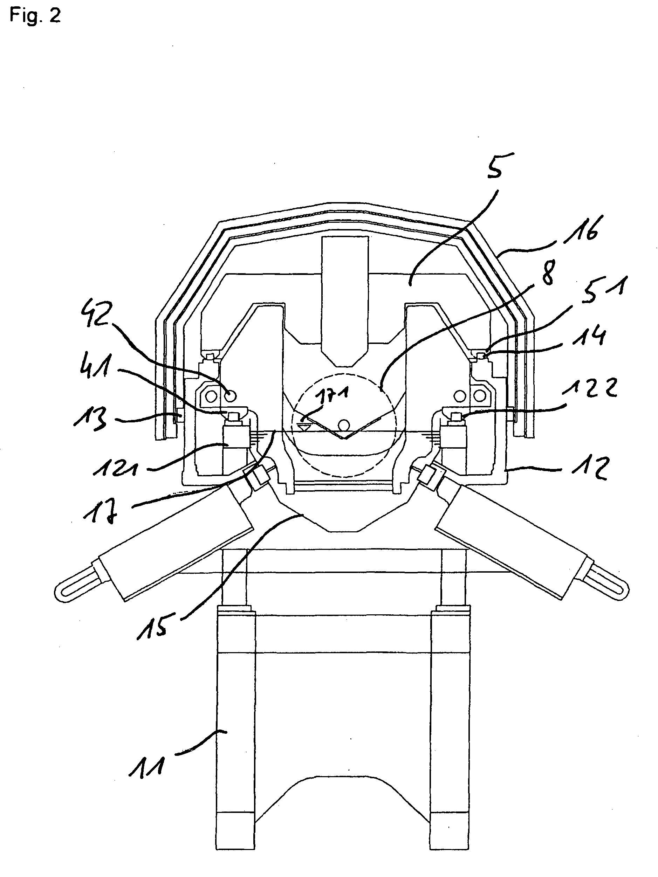

Der Maschinenkorpus 1 besteht aus einem Ständerwerk 11, welches einen umlaufenden Rahmen 12 aufnimmt, in dem das Walzenbecken 15 angeordnet ist. Der Rahmen 12 weist einen im Wesentlichen L-förmigen Querschnitt auf, wobei die horizontalen bodenseitigen Stege des Querschnitts nach innen abgewinkelt ausgebildet sind und an dem Walzenbecken 15 anliegen (vgl. Figur 2). Seitlich ist an dem Rahmen 12 an seinen Längsseiten jeweils eine äußere Führungsschiene 13 zur Aufnahme der teleskopartig angeordneten Kapselkörper 161 der Umhausung 16 angeordnet. An seiner der Umhausung 16 zugewandten Oberseite ist eine weitere, obere Führungsschiene 14 zur Aufnahme eines Multifunktionsfahrmoduls 5 angeordnet. Parallel zu den Außenwänden des Rahmens 12 ist innen an dem horizontalen Boden des Rahmens 12 an beiden Längsseiten jeweils eine Stützwand 121 angeordnet, an denen das Walzenbecken 15 fixiert ist. Auf der Oberkante der Stützwände 121 ist wiederum eine innere Führungsschiene 122 zur Aufnahme von Treibstock 2, Reitstock 3 und Setzstöcken 4 angebracht. Die innen liegenden Führungsschienen 122, 14 des Rahmens 12 sind derart positioniert, dass sie bei gefülltem Walzenbecken 15 oberhalb des Dielektrikumsspiegels 171 angeordnet sind, derart, dass diese nicht in Kontakt mit dem Dielektrikum 17 kommen können.

Treibstock 2, Reitstock 3 sowie die beiden Setzstöcke 4 weisen gegenüberliegend angeordnete auskragende Arme 20, 30, 40 auf, die mit Gleitschienen 21, 31, 41 versehen sind, mit denen sie auf den gegenüberliegend angeordneten inneren Führungsschienen 122 des Rahmens 12 verschiebbar gelagert sind. Parallel zu den Gleitschienen 21, 31, 41 sind in den Armen 20, 30, 40 des Treibstocks 2, des Reitstocks 3 sowie der Setzstöcke 4 an beiden Seiten Mitnehmerdurchführungen 22 eingebracht, durch die zwei Mitnehmerstangen 61 eines Antriebsrahmens 6 geführt sind. Treibstock 2, Reitstock 3 sowie Setzstöcke 4 sind über die Mitnehmerdurchführungen 22, 32, 42 auf den Mitnehmerstangen 61 des Antriebsrahmens verschiebbar sowie über einen - nicht dargestellten - Klemmmechanismus festsetzbar.

An den seitlichen Armen 20 des Treibstocks 2 ist zu beiden Seiten jeweils eine Spindelaufnahme 23 angeordnet, durch die jeweils eine Spindel 62 geführt ist. Die Spindeln 62 sind über miteinander synchronisierte Antriebe 63 rotierbar. Zur Positionierung von Treibstock 2, Reitstock 3 sowie Setzstöcken 4 innerhalb des Rahmens 12 des Maschinenkorpus 1 werden die Spindeln 22 rotiert, wodurch der Treibstock 2 horizontal auf der inneren Führungsschiene 122 des Rahmens 12 bewegt wird. Wird der Treibstock 2 über die Mitnehmerdurchführung 22 an den Mitnehmerstangen 61 des Antriebsrahmens 6 festgesetzt, so wird der gesamte Antriebsrahmen 6 sowie die auf den Mitnehmerstangen 61 des Antriebsrahmens 6 festgesetzten Funktionselemente Reitstock 3 und Setzstöcke 4 bewegt. Hat ein Funktionselement seine Position erreicht, wird die Festsetzung durch die entsprechende Mitnehmerdurchführung 32, 42 gelöst. In diesem Fall werden die Mitnehmerstangen 61 des Antriebsrahmens 6 durch die Mitnehmerdurchführungen 32 bzw. 42 hindurchbewegt. Separate Antriebe der Funktionselemente Treibstock 2, Reitstock 3 und Setzstöcke 4 sind nicht erforderlich.

Die Setzstöcke 4 sind mit den seitlichen Armen 40 über - nicht dargestellte - Lifter verbunden, über welche die Setzstöcke 4 in Abhängigkeit vom Durchmesser der zu bearbeiteten Walze 8 vertikal verstellbar sind. Die - nicht dargestellten - Lifter können beispielsweise über einen vertikalen Spindeltrieb gebildet sein. Alternativ sind auch pneumatische oder elektrische Verstelleinrichtungen möglich.

Auf der oberen Führungsschiene 14 des Rahmens 12 ist ein Multifunktionsfahrmodul 5 verschiebbar gelagert. Hierzu weist das Multifunktionsfahrmodul 5 seitliche Arme 50 auf, welche mit Gleitschienen 51 versehen sind, die die Führungsstege 14 umgreifen. Das Multifunktionsfahrmodul ist dabei derart ausgebildet, dass es auch bei geschlossener Umhausung 16 frei über die Funktionselemente Treibstock 2, Reitstock 3 und Setzstöcke 4 über die gesamte Länge des Rahmens 12 verfahrbar ist. Das Multifunktionsfahrmodul 5 kann mit beliebigen Einrichtungen ausgestattet sein. Diese Einrichtungen können für die Maschinenüberwachung und Einrichtung selbst Verwendung finden. Des weiteren können hier auch beispielsweise Einrichtungen für eine ergänzende Bearbeitung der texturierten Oberfläche angeordnet sein. Das Multifunktionsfahrmodul 5 ist mit einem - nicht dargestellten - separaten Antrieb versehen, sodass es unabhängig von den Antrieben 63 des Antriebsrahmens 6 verfahrbar ist.

Die an den Seitenwänden des Walzenbeckens 5 angeordneten Elektrodeneinheiten 3 sind im Ausführungsbeispiel derart angestellt, dass sich ihre verlängerte Achse in der Einspannachse der Walze 8 mit der jeweils gegenüberliegenden Elektrodeneinheit 7 in einem Winkel von 55 Grad schneidet. Die Elektrodeneinheiten 7 umfassen jeweils einen Linearmotor 71, dessen Läufer 711 mit einem Anschlussblock 72 verbunden ist, an dem ein Ausleger 73 befestigt ist, der einen Elektrodenkopf 75 zur Aufnahme einer Elektrode 76 aufweist. Der Ausleger 73 ist im Ausführungsbeispiel in Form einer Hohlwelle ausgebildet, welche in einer Bohrung 722 des Anschlussblocks 72 eingreift. Der Anschlussblock 72 ist über ein Flanschteil 721 mit dem Läufer 711 des Linearmotors 71 verbunden, derart, dass der Ausleger 73 parallel zum Läufer 711 angeordnet ist.

An ihrer dem Anschlussblock 72 zugewandten Seite ist in dem hohlwellenartig ausgebildeten Ausleger 73 ein Anschlussteil 731 abdichtend eingebracht. Das Anschlussteil 731 weist eine Leitungsdurchführung 732 für ein elektrisches Kabel 735 auf, welches mittig innerhalb des Auslegers 73 entlang seiner Mittelachse angeordnet ist und das mit dem am gegenüberliegenden Ende des Auslegers 73 angeordneten Elektrodenkopf 75 zur elektrischen Versorgung der von diesem aufgenommenen Elektrode 76 verbunden ist. Weiterhin ist in dem Anschlussteil 731 ein Fluidanschluss 733 zum Anschluss einer Fluidleitung 734 angeordnet. Die Fluidleitung 734 dient der Befüllung des hohlwellenartigen Auslegers 73 mit Dielektrikum 17. Der Ausleger 73 dient so als Zuleitung für das Dielektrikum 17 zur Spülung der Elektrode 76. Durch die Umspülung des mittig innerhalb des Auslegers 73 geführten Kabels 735 wird das Kabel 735 durch das umspülende Dielektrikum 17 gekühlt. Zugleich ist es vor äußeren Beschädigungen geschützt. Alternativ kann auch eine separate Zuleitung für das Dielektrikum zur Spülung der Elektrode angeordnet sein.

Der Elektrodenkopf 75 weist eine Bohrung 751 auf, welche das dem Anschlussblock 72 gegenüberliegende Ende des Auslegers 73 aufnimmt. Die Bohrung 751 ist derart innerhalb des Elektrodenkopfes 75 geführt, dass durch den Ausleger 73 geleitetes Dielektrikum 17 die von dem Elektrodenkopf 75 aufgenommene Elektrode 76 spült. Hierzu kann die Elektrode 76 hohl ausgebildet und mit nach außen führenden Öffnungen für den Austritt des Dielektrikums 17 versehen sein. Im Übergang zwischen Ausleger 73 und Elektrodenkopf 75 ist ein Ventil 752 angeordnet, das mit einem an dem Elektrodenkopf 75 positionierten Endschalter 77 verbunden ist. Der Endschalter 77 ist derart ausgebildet, dass er im eingefahrenen Zustand des Auslegers an der Innenwand des Walzenbeckens 15 betätigt wird, wodurch das Ventil 752 geschlossen wird. Hierdurch wird verhindert, dass im eingefahrenen Zustand, beispielsweise bei der Textierung einer kurzen Walze, wo die entsprechende Elektrode nicht benötigt wird, eine unnötige Spülung dieser inaktiven Elektrode 76 mit Dielektrikum 17 erfolgt.

Dir Ausleger 73 der Elektrodeneinheiten 7 sind durch eine Durchführung 74 durch die Wandung des Walzenbeckens 15 geführt, durch welche die Ausleger 73 gegenüber der Wandung des Walzenbeckens 15 abgedichtet sind.

Die Linearmotoren 71 der Elektrodeneinheiten 7 sind im Ausführungsbeispiel mit einer - nicht dargestellten - Steuer- und Regeleinheit verbunden, über welche die Anstellung der Elektroden 76 an die zu textierende Walze 8 derart erfolgt, dass der Abstand zwischen Elektrode 76 und Walze 8 während des Erodierprozesses konstant ist. Die - nicht dargestellte - Steuer- und Regeleinheit ist mit einer - ebenfalls nicht dargestellten - Auswertungseinheit verbunden, welche derart eingerichtet ist, dass auf Basis der Anstellpositionsdaten der Elektroden sowie von hinterlegten Sollmaßdaten der zu bearbeitenden Walze 8 die Maßhaltigkeit der Walze 8 ermittelt und die Ist-Maße der Walze 8 gegenüber den hinterlegten Soll-Maßen grafisch auf einem Bildschirm dargestellt werden. Die enorme Genauigkeit der eingesetzten Linearmotoren 71 ermöglicht dabei die Ermittlung geringster Abweichungen.

## Patentansprüche

1. Vorrichtung zum Texturieren einer Walze, umfassend eine Aufnahme für eine Walze sowie beidseitig einer aufgenommenen Walze angeordnete Elektroden, wobei Mittel zur Anstellung der Elektroden an die Walze angeordnet sind und wobei die Mittel zur Anstellung der Elektroden (76) an die Walze (8) wenigstens einen Linearmotor (71) umfassen, der mit einer Elektrode (76) verbunden ist, über den dieser radial in Richtung der Walze (8) bewegbar ist und wobei wenigstens eine Spülleitung zur Spülung der Elektroden (76) mit einem Dielektrikum angeordnet ist, **dadurch gekennzeichnet, dass** die Spül-leitung durch einen als Hohlprofil ausgebildeten Ausleger (73) gebildet ist, wobei mittig in dem Ausleger (73) eine mit der an dem Ausleger (73) angeordneten Elektrode (76) verbundene elektrische Leitung (735) angeordnet ist, die von in dem Hohlprofil gefördertem Dielektrikum umspülbar ist.

2. Vorrichtung nach Anspruch 1, **dadurch gekennzeichnet, dass** der wenigstens eine Linearmotor (71) ein Linearschrittmotor ist.

3. Vorrichtung nach Anspruch 1 oder 2, **dadurch gekennzeichnet, dass** der wenigstens eine Linearmotor (71) mit einem Ausleger (73) verbunden ist, an dem ein Elektrodenkopf (75) zur Aufnahme einer Elektrode (76) angeordnet ist.

4. Vorrichtung nach Anspruch 3, **dadurch gekennzeichnet, dass** der Ausleger (73) als Hohlprofil ausgebildet ist, wobei innerhalb des Hohlprofils eine elektrische Leitung (735) angeordnet ist, die elektrisch mit der Elektrode (76) verbunden ist.

5. Vorrichtung nach einem der vorgenannten Ansprüche, **dadurch gekennzeichnet, dass** je Elektrode (76) eine Spülleitung angeordnet ist.

6. Vorrichtung nach einem der vorgenannten Ansprüche, **dadurch gekennzeichnet, dass** wenigstens eine Elektrode (76) hohl ausgebildet ist, wobei die Spülleitung mit dem Hohlraum der Elektrode (76) verbunden ist und wobei der Hohlraum mindestens eine Öffnung zur Spülung der Elektrode (76) von innen heraus aufweist.

7. Vorrichtung nach einem der vorgenannten Ansprüche, **dadurch gekennzeichnet, dass** Mittel zur Durchflusssteuerung in Abhängigkeit von der Auslegerposition angeordnet sind.

8. Vorrichtung nach Anspruch 7, **dadurch gekennzeichnet, dass** die Mittel zur Durchflussteuerung einen Schalter (77) umfassen, der an dem Elektrodenkopf (75) des Auslegers (73) angeordnet ist.

9. Vorrichtung nach Anspruch 8, **dadurch gekennzeichnet, dass** die Durchflusssteuerung derart ausgebildet ist, dass beim Zurückfahren eines Elektrodenkopfes (75) in eine Ruheposition die Durchflussmenge des Dielektrikums zur Spülung der zugeordneten Elektrode (76) vermindert wird.

10. Vorrichtung nach einem der Ansprüche 3 bis 8, **dadurch gekennzeichnet, dass** wenigstens eine Reihe von Elektroden (76) angeordnet ist, welche jeweils mit einem Linearmotor (71) verbunden sind, über den sie an die Walze (8) anstellbar sind, wobei wenigstens ein Rahmen angeordnet ist, an dem die Linearmotoren (71) befestigt sind, wobei der wenigstens eine Rahmen mit einem Antrieb, vorzugsweise einem Spindeltrieb verbunden ist, über den er in Richtung der Walze (8) bewegbar ist.

11. Vorrichtung nach einem der vorgenannten Ansprüche, **dadurch gekennzeichnet, dass** die Linearmotoren (71) zur Anstellung der Elektroden (76) mit einer Steuerungs- und Regelungseinrichtung verbunden sind, die derart eingerichtet ist, dass die Linearmotoren (71) derart angesteuert werden, dass der Abstand der Elektroden (76) zur Walze (82) konstant ist, wobei die Linearmotoren (71) zumindest teilweise Mittel zur Ermittlung der Position der jeweils zugeordneten Elektrode (76) aufweisen, weiche mit einer Auswerteinheit verbunden ist, die derart eingerichtet ist, dass auf Basis der Position der einzelnen Elektroden (76) die Maßhaltigkeit der Walze (8) gegenüber vorgegebenen Sollmaßen ermittelbar ist.

12. Vorrichtung nach Anspruch 11, **dadurch gekennzeichnet, dass** die Auswerteinheit mit einer Ausgabeeinheit verbunden ist, über welche die Abweichungen zwischen Soll- und Istwerten der Walzenmaße grafisch darstellbar sind.

13. Vorrichtung nach Anspruch 11 oder 12, **dadurch gekennzeichnet, dass** die Ausgabeeinheit derart eingerichtet ist, dass abhängig von den ermittelten Soll-/Ist- Abweichungen eigenständig Regelparameter variiert werden, um Walzenfehler während des Texturierprozesses zu kompensieren.

## Claims

1. Device for texturing a roller, comprising a retaining seat for a roller, electrodes arranged on either side of the retained roller, were means of moving the electrodes against the roller are provided and where the means of moving the electrodes (76) against the roller (8) comprise at least one linear motor (71) which is connected to an electrode (76), by means of which this can be moved radially towards the roller (8), and where at least one flushing duct is arranged for flushing the electrodes (76) with a dielectric fluid, **characterised in that** the flushing duct is formed as an extension arm (73) in the shape of a hollow profile, where an electric wire (735) connected to the electrode (76) arranged on the extension arm is arranged in the centre of the extension arm (73) which can be rinsed by the dielectric fluid transported in the hollow profile.

2. Device in accordance with claim 1, **characterised in that** the at least one linear motor (71) is a linear stepper motor.

3. Device in accordance with claim 1 or claim 2, **characterised in that** the at least one linear motor (71) is connected to an extension arm (73) on which an electrode head (75) for receiving an electrode (76) is arranged.

4. Device in accordance with claim 3, **characterised in that** the extension arm (73) is formed as a hollow profile, where an electric wire (735) is arranged inside the hollow profile and is connected electrically to the electrode (76).

5. Device in accordance with any of the aforementioned claims, **characterised in that** a flushing duct is arranged for each individual electrode (76).

6. Device in accordance with any of the aforementioned claims, **characterised in that** at least one electrode (76) is hollow in form, where the flushing duct is connected to the hollow space of the electrode (76) and where the hollow space has at least one opening for flushing the electrode (76) from the inside outwards.

7. Device in accordance with any of the aforementioned claims, **characterised in that** means of controlling the flow with reference to the position of the extension arm are provided.

8. Device in accordance with claim 7, **characterised in that** the means of controlling the flow comprise a switch (77) which is arranged on the electrode head (75) of the extension arm (73).

9. Device in accordance with claim 8, **characterised in that** the flow-control system is formed in such a way that when an electrode head (75) is retracted to its starting position, the amount of dielectric fluid flowing to flush its assigned electrode (76) is reduced.

10. Device in accordance with any of the claims 3 to 8, **characterised in that** at least one row of electrodes (76) is arranged, each of which is connected to a linear motor (71) by means of which they can be moved against the roller (8), where at least one frame is arranged to which the linear motors (71) are attached, where the at least one is connected to a drive system, preferably a spindle drive, by means of which they can be moved towards the roller (8).

11. Device in accordance with any of the aforementioned claims, **characterised in that** the linear motors (71) for positioning the electrodes (76) are connected to a control and regulating device, which is set in such a way that the linear motors (71) are controlled in such a way that the distance between the electrodes (76) and the roller (8) is constant, where at least some of the linear motors (71) have means of determining the position of the electrode (76) assigned to them, which is connected to an evaluating unit which is set in such a way that, on the basis of the position of the individual electrodes (76), the dimensional accuracy of the roller (8) can be determined with reference to the specified dimensions.

12. Device in accordance with claim 11, **characterised in that** the evaluating unit is connected to an output unit by means of which the deviation of the actual dimensions of the roller from the specified dimensions can be depicted in graphic form.

13. Device in accordance with claim 11 or claim 12, **characterised in that** the output device is set in such a way that, on the basis of the deviations from the specified dimensions, the control parameters can be varied automatically during the texturing process to compensate for defects in the roller.

## Revendications

1. Dispositif pour texturer un cylindre, comprenant un logement de cylindre ainsi que des électrodes des deux côtés d'un cylindre logé, sachant que sont agencés des moyens permettant de mettre les électrodes en applique contre le cylindre et sachant que les moyens servant à mettre les électrodes (76) en applique contre le cylindre (8) comprennent au moins un moteur linéaire (71) relié à une électrode (76) et via lequel cette dernière est déplaçable radialement en direction du cylindre (8) et sachant qu'est agencée au moins une conduite servant à rincer les électrodes (76) avec un liquide diélectrique, **caractérisé en ce que** la conduite de rinçage est formée par un bras (73) configuré en profilé creux, sachant qu'au milieu à l'intérieur du bras (73) une ligne électrique (735) est agencée reliée à l'électrode (76) agencée contre le bras (73), ligne qu'il est possible de faire baigner dans le diélectrique refoulé dans le profilé creux.

2. Dispositif selon la revendication 1, **caractérisé en ce qu'**au moins un moteur linéaire (71) est un moteur linéaire pas à pas.

3. Dispositif selon la revendication 1 ou 2, **caractérisé en ce qu'**au moins un moteur linéaire (71) est relié à un bras (73), bras contre lequel est agencé une tête (75) destinée à recevoir une électrode (76).

4. Dispositif selon la revendication 3, **caractérisé en ce que** le bras (73) est configuré en profilé creux, sachant qu'à l'intérieur du profilé creux est agencée une ligne électrique (735) reliée électriquement avec l'électrode (76).

5. Dispositif selon l'une des revendications précédentes, **caractérisé en ce qu'**a été agencée une conduite de rinçage par électrode (76).

6. Dispositif selon l'un des revendications précédentes, **caractérisé en ce qu'**au moins une électrode (76) est configurée creuse, sachant que la conduite de rinçage est reliée à la cavité de l'électrode (76) et sachant que la cavité présente au moins un orifice permettant de rincer l'électrode (76) de l'intérieur vers l'extérieur.

7. Dispositif selon l'une des revendications précédentes, **caractérisé en ce que** sont agencés des moyens destinés à piloter le débit en fonction de la position du bras.

8. Dispositif selon la revendication 7, **caractérisé en ce que** les moyens servant à piloter le débit comprennent un interrupteur (77) agencé contre la tête (75) d'électrode du bras (73).

9. Dispositif selon la revendication 8, **caractérisé en ce que** le pilotage du débit est configuré de sorte que lorsqu'une tête (75) d'électrode recule jusque sur une position de repos, le débit du diélectrique servant à rincer l'électrode (76) de cette tête diminue.

10. Dispositif selon l'une des revendication 3 à 8, **caractérisé en ce qu'**est agencée au moins une série d'électrodes (76) reliées chacune avec un moteur linéaire (71) via lequel elles peuvent entrer en applique contre le cylindre (8), sachant qu'est agencé au moins un cadre contre lequel sont fixés les moteurs linéaires (71), sachant qu'au moins un cadre est relié à un entraînement, de préférence une transmission par broche via laquelle ce cadre est déplaçable en direction du cylindre (8).

11. Dispositif selon l'une des revendications précédentes, **caractérisé en ce que** les moteurs linéaires (71) servant à mettre les électrodes en applique (76) sont reliés à un équipement de commande et régulation ajusté de sorte que les moteurs linéaires (71) soient pilotés d'une manière maintenant constant l'écart des électrodes (76) par rapport au cylindre (82), sachant que les moteurs linéaires (71) présentent au moins en partie des moyens servant à déterminer la position de chaque électrode (76) afférente reliée à une unité d'analyse, unité qui est ajustée de sorte à pouvoir déterminer par comparaison, en se basant sur la position de chaque électrode (76), si le cylindre (8) respecte des cotes de consignes imposées.

12. Dispositif selon la revendication 11, **caractérisé en ce que** l'unité d'analyse est reliée à une unité d'édition via laquelle il est possible d'afficher sous forme graphique les dérives entre les valeurs de consigne et valeurs réelles des cotes du cylindre.

13. Dispositif selon la revendication 11 ou 12, **caractérisé en ce que** l'unité d'édition est configurée de sorte à faire varier, de manière indépendante et en fonction des dérives entre valeurs de consigne et valeurs réelles, les valeurs paramétriques de régulation afin de compenser les défauts du cylindre pendant le processus de texturation.
